# EUROPEAN PATENT SPECIFICATION

(11) **EP 1 632 332 B1**
(45) Date of publication and mention of the grant of the patent: **26.11.2008**
(21) Application number: 05106832.8
(22) Date of filing: 25.07.2005
(51) Int. Cl.: B29C 47/68, B29B 17/00

(54) **Method and device for recycling a mixture of polymethylmethacrylate and/or acrylonitrile-butadiene-styrene and crosslinked polymethylmethacrylate**
Verfahren und Vorrichtung zur Wiederverwertung von Polymethylmethacrylat und/oder Acrylonitril-butadiene-styren und vernetztes Polymethylmethacrylat
Procédé et appareil pour le recyclage de polyméthylméthacrylate et/ou d' acrylonitril-butadiène-styrène et de polyméthylméthacrylate réticulé

(30) Priority: 03.08.2004 IT MI20041596
(43) Date of publication of application: 08.03.2006
(73) Proprietor: TICINOPLAST S.R.L., 20010 Pogliano Milanese MI (IT)
(72) Inventor: Besozzi, Carlo, Angelo, 20020 Arese (Milano) (IT); Rainoldi, Rossella, Chiara, 20010 Pogliano Milanese (Milano) (IT)
(74) Representative: Ripamonti, Enrico

(56) References cited:
- EP-A- 0 976 525
- EP-A- 1 208 956
- GB-A- 2 313 088
- US-A- 4 804 510
- US-A- 5 498 334
- US-A1- 2002 153 628
- PATENT ABSTRACTS OF JAPAN vol. 009, no. 242 (M-417), 28 September 1985 (1985-09-28) & JP 60 096429 A (TORAY KK), 30 May 1985 (1985-05-30)

## Description

The present invention relates to a method and device for recycling a mixture of polymethylmethacrylate (PMMA) and/or acrylonitrile-butadiene-styrene (ABS) and crosslinked polymethylmethacrylate, in accordance with the introduction to the main claim.

The invention also comprises a multilayer extruded slab.

For simplicity, those acronyms already indicated in parentheses will be used throughout the text to indicate polymers.

With regard to PMMA, substantial difference is known to exist between the various types of commercially available PMMA slabs. A first type is the extruded slab, obtained from non-crosslinked PMMA, either standard or high impact (HIPMMA), and representing about 60% of the quantity currently available, the remainder being represented by crosslinked PMMA slabs.

The substantial difference between the two is that at the end of its useful life the first (extruded PMMA) can be simply re-extruded and reused after grinding, while the second type of PMMA, i.e. crosslinked PMMA, cannot be reused without using pyrolysis processes to reconvert the plastic to the starting monomer.

The pyrolysis process can however only be used for crosslinked PMMA scrap not contaminated by other polymers (traces of extruded PMMA can be tolerated, provided it is not high impact).

ABS is also a material which can be recycled by re-extrusion or injection moulding; re-extrusion of mixtures of ABS and extruded PMMA presents no technical problems. However it can happen that ground scrap from ABS and/or extruded PMMA slabs is accidentally contaminated with crosslinked PMMA, making recycling problematical.

Contamination of extruded PMMA and/or ABS with even minimal traces of crosslinked PMMA compromises the technical and aesthetic characteristics of the product obtained, because of a behaviour which is not precisely thermoplastic, and more comparable to an inert.

This creates considerable problems, due to the fact that extruded PMMA and crosslinked PMMA are visually indistinguishable, and for this reason any sorting aimed at separating the two types of substance would be difficult and unsafe.

Those firms which currently recycle PMMA and/or ABS have to live with the problem of contamination by crosslinked PMMA, leading to the discarding of large quantities of material intended for recycling.

A solution currently applied is to produce small homogeneous batches (about 1000 kg) of ground scrap (PMMA and/or ABS): each batch is subjected to an extrusion test to check for the presence or absence of crosslinked PMMA. Those batches which prove suitable are used, whereas those batches presenting traces of crosslinked PMMA are discarded.

This not only results in a considerable time wastage, but also causes considerable losses in terms of costs and the efficiency of the production cycle.

This solution also involves a certain degree of risk, in particular under low contamination conditions.

It has been attempted to solve the problem of contamination of extruded PMMA and/or ABS and crosslinked PMMA by micronizing the material in order to disperse the crosslinked PMMA as finely as possible within the extruded PMMA and/or ABS, and hence reduce the size of the contaminating particles to a value sufficiently low to ensure good technical characteristics for the product obtained.

Dispersion of the crosslinked PMMA is efficient only if the crosslinked PMMA particles are micronized to very small dimensions. This particle reduction, known as micronization, can be achieved for example by grinding under nitrogen or by using Pallmann mills, however to obtain acceptable results the grinding level must be so fine as to make the process decidedly antieconomical. In fact, acceptable results are obtained only when the crosslinked PMMA particle size is less than 200 micron diameter.

The aforedescribed process has the considerable drawback of being discontinuous.

Moreover, as the problem relates to the accidental contamination of extruded PMMA and/or ABS by traces of crosslinked PMMA, micronization would have to be carried out on the entire material, also comprising the non-crosslinked fraction, with a further cost burden.

Known devices and methods are disclosed in US-A4804510 and GB-A-2313088. Document US 4,804,510 describes a filtering system comprising three filtering screens in series, as shown in fig 6. Even if the drawing shows three filters spaced apart, it could be easily understood that during the filtration process (i.e. when the filters screen are subject to mixture's pressure) those filters are in mutual contact.

An object of the present invention is to provide a device for recycling a mixture of polymethylmethacrylate (PMMA) and/or acrylonitrile-butadiene-styrene (ABS) and crosslinked polymethylmethacrylate (PMMA) which represents an improvement over the known art, by being economical in terms of operating costs and by enabling a recycling process to be achieved in a single passage.

Another object of the present invention is to provide a method for recycling a mixture of PMMA and/or ABS and crosslinked PMMA, which is simple and economical to implement.

A further object of the present invention is to provide a slab produced from PMMA and/or ABS contaminated and crosslinked PMMA.

These and other objects are attained by a device for recycling a mixture of PMMA and/or ABS and crosslinked PMMA in accordance with the technical teachings of the accompanying claims.

The said objects are also attained by a method for recycling a mixture of PMMA and/or ABS and crosslinked PMMA according to the technical teachings of the accompanying relative independent claim.

The present invention also relates to a slab in accordance with the technical teachings of the relative independent claim.

Further characteristics and advantages of the invention will be apparent from the description of a preferred but non-exclusive embodiment of the device and method for recycling a mixture of PMMA and/or ABS and crosslinked PMMA, illustrated by way of non-limiting example in the accompanying drawings, in which:

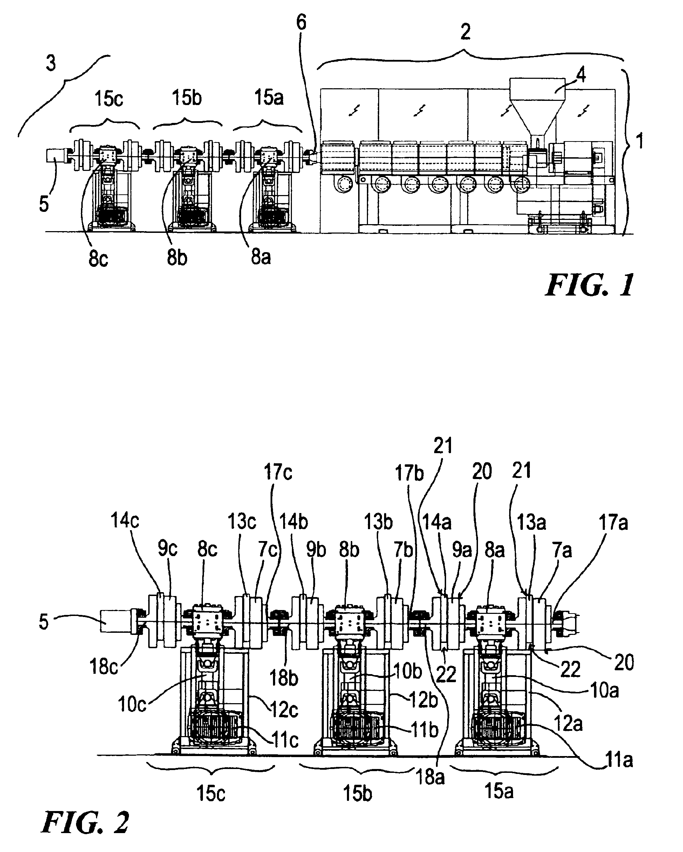

Figure 1 is a simplified schematic view of a recycling device according to the present invention;
Figure 2 is a schematic view of a filtration unit, comprising three stages, of the device of Figure 1;
Figure 3A is a perspective view of a filter usable in the device of Figure 1;
Figure 3B is a perspective view of another filter of rimmed type usable in the device of Figure 1;
Figure 3C is a detailed view showing how the filter of Figure 3A is composed;
Figure 4 is a cut-away perspective view of a gear pump;
Figure 5 is a perspective view of a filter changer present in the device of Figure 1; and
Figure 6 is a section through a multilayer slab formed from the PMMA recycled by the device of Figure 1.

Said figures show a device for recycling a mixture of PMMA and crosslinked PMMA, indicated overall by 1.

Reference will be made hereinafter only to PMMA, however it is apparent that the same teachings are also valid for ABS or for mixtures of PMMA and

ABS contaminated by crosslinked PMMA.

The mixture of extruded PMMA (and/or ABS) to be treated by the device to be described is contaminated by 20% (but can also reach 50%) by weight of PMMA and can originate either from the grinding of machining scrap or from scrapped products. The mixture can also comprise other substances such as colorants, stabilizers or the like. The mixture can also present non-negligible percentages of other plastics such as those known by the acronyms PE, SAN, etc.

The device comprises an extruder unit 2, downstream of which there is a filtration/dispersion unit 3.

It should be noted that the described recycling device can also comprise other mixture treatment stages upstream of the extrusion stage, such as
- depolythenization treatment;
- depulverization treatment;
- demetallization treatment;
- homogenization of the ground substance;
operated by suitable devices (not shown, but of conventional type), and carried out on the mixture according to the contaminations which it presents and according to its origin.

The extruder unit 2 is fed by the hopper 4.

Downstream of the filtration unit 3 and connected to the conduit 5 there is a conventional granulation line (not shown) composed of a head unit, cooling tank, air dryer and cutter. These components, used downstream of an extruder, are conventional and will hence not be further described.

It should be noted that other line types can be positioned downstream of the extruder, for example a granulation line with a cutter at its head under water, in air, etc.

The extruder unit 2 is of conventional single-screw two-stage degassed thirtyfive diameter type provided with an enlarged thrust bearing, compression ratio 1 to 2, screw diameter 100 mm. This extruder unit 2 is flanked by conventional vacuum puminimum passage aperture and fume abatement systems (not shown).

An exit 6 of said extruder is connected to a first filter changer 7a positioned at the inlet of a gear pump 8a, at the outlet of which a further filter changer 9a is provided. The filter changers 7a, 9a are each equipped with a first and a second filter 13a, 14a, described hereinafter.

The gear pump 8a is conventional, for example of the type for pumping molten thermoplastic material and delivering a head of at least 400 bar, coupled to a drive unit 11a by a cardan shaft 10a and supported by a suitable support 12a. This pump is conventional and will therefore not be further described.

The filter changers 7a, 9a are of manual type and support filters 13a, 14a. These filter changers are substantially in the form of a frame 20 comprising two facing perforated plates defining an interspace 22 within which there slides, hinged to them, a perforated plate 21 in which the filter is located. By means of a lever 23 fixed to it, this plate 21 can be rotated about the hinge point and hence be substantially extracted from the interspace 22 to enable its supported filter 13a to be changed, without dismantling the device.

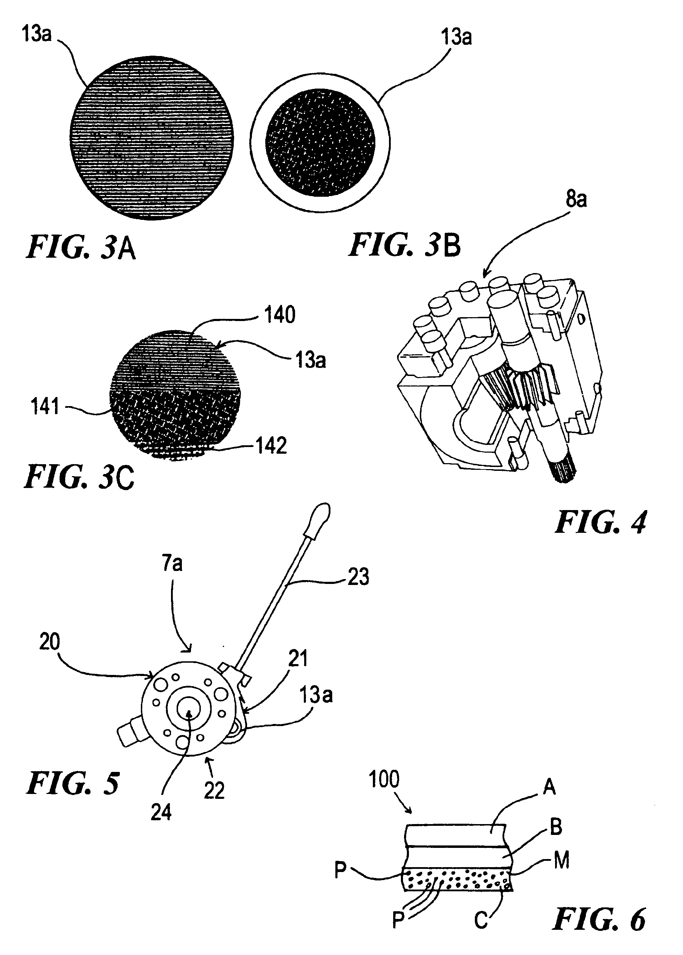

When the plate 21 is housed within the interspace 22, the filter 13a is aligned with a conduit 24 central to the filter changer 7a, and through which the molten mixture can pass. Advantageously suitable gaskets are provided to prevent seepage of the mixture at the interspace 22, or alternatively rimmed filters such as that shown in Figure 3B are used. The supported filters 13a, 14a are for example of the mesh type marketed by the firm "Southwest" with the brand name "Multipor", and are shown in Figure 3C.

They consist substantially of a plurality of superposed meshes. A first mesh 140 provides the filtering and cutting effect characteristic of the filter, while the supporting second mesh 141 and third mesh 142 give the filter the necessary mechanical properties.

Several associated meshes with a filtering effect can also be used, possibly separated by stiffening meshes.

The gear pump 8a, the filter changers 7a, 9a and the filters 13a, 14a before and after the pump 8a, the motor 11a, the cardan shaft 10a and the support 12a define a first filtration station 15a.

The first filtration station 15a is followed by a second filtration station 15b, the second filtration station being followed by a third filtration station 15c.

In a different embodiment a further filtration station totally similar to the preceding can be provided.

The three filtration stations 15a, 15b, 15c are similar in that they present the same components. The filters with which they are equipped are however different. In the drawings, to indicate functionally similar parts the same reference numerals are used followed by a different alphabetical letter. Consequently the second and third filtration station and their parts will not be further described.

The characteristic which differentiates the filters is their minimum passage aperture, which is as follows. Preferably the first filter 13a and second filter 14a of the first station 15a present a minimum passage aperture of 75 and 50 micron respectively, the filters 13b, 14b of the second station 15b present a minimum passage aperture of 50 and 40 micron respectively, whereas the third station 15c presents only one filter 14c with a minimum passage aperture of 40 micron. In a different embodiment the first filter 13a and second filter 14a of the first station 15a present a minimum passage aperture of 75 and 50 micron respectively, the filters 13b, 14b of the second station 15b present a minimum passage aperture of 50 and 40 micron respectively, whereas the third station 15c presents two filters 13c, 14c with a minimum passage aperture of 40 micron.

In a third possible embodiment, the first filter 13a and second filter 14a of the first station 15a present a minimum passage aperture of 50 and 50 micron respectively, the filters 13b, 14b of the second station 15b present a minimum passage aperture of 40 and 40 micron respectively, whereas the third station 15c presents two filters 13c, 14c with a minimum passage aperture of 30 and 25 micron respectively.

These filter arrangements are largely indicative and can in any event be varied, by varying the minimum passage aperture of the filters, to optimize the device operating cycle.

The filters disposed in the filter holders can, as already stated, be of the single or multilayer filter mesh type.

A pair of filters 13a such as those shown in Figure 3A disposed with their meshes opposing can also be used, to improve their mechanical pressure resistance characteristics.

The device 1 operates as follows by implementing the following stages, the mixture of extruded PMMA (and/or ABS) contaminated with crosslinked PMMA being initially
- depolythenized,
- depulverized,
- demetallized and
- homogenized,
after which by means of the device 1 the mixture is:
- extruded by the extruder unit 2;
- fed under pressure to the first filter 13a of the first station 15a, with minimum passage aperture of 75 micron;
- raised in pressure by the gear pump 8a;
- fed under pressure to a second filter 14a of the first station 15a, with minimum passage aperture of 50 micron;
- fed under pressure to a first filter 13b of the second station 15b, with minimum passage aperture of 50 micron;
- raised in pressure by the gear pump 8b;
- fed under pressure to a second filter 14b of the second station 15b, with minimum passage aperture of 40 micron;
- raised in pressure by the gear pump 8c, and finally
- fed under pressure to a second filter 14c of the third station 15c, with minimum passage aperture of 40 micron; then granulated.

It has been surprisingly found that by means of multiple successive filtrations operated by filters of equal or decreasing aperture within the filtration stations 15a, 15b and 15c, such a device and method enable the size of the crosslinked PMMA present in the material undergoing treatment to be reduced to dimensions considered acceptable and advantageously less than 200 micron diameter.

This is achieved by the cutting capacity presented by certain types of filters, such as multipor meshes, metal powders (possibly sintered) and sintered meshes.

Essentially any crosslinked PMMA present in the starting material is not retained by the filter meshes, but instead in passing through them is "cut" and homogenized by the filters until in the final extruded product it is virtually indistinguishable from the rest of the treated material.

Consequently in this description, although reference is made to a filter, this term means any baffle presenting a cutting capacity.

The use of filtration to reduce the particle size of crosslinked PMMA has never been considered, as it has been found that after initial filtration (effected for example by a filter presenting a minimum passage aperture of 70 micron), the ground crosslinked PMMA particles (for example of initial diameter 10 mm) were not retained but instead downstream of the filter presented dimensions from 30 to 60 times greater than the aperture through which they had passed.

In contrast, it has been surprisingly found that on effecting a second filtration passage (for example with a filter with characteristics similar to the first), good homogeneity and considerable progress in terms of dispersion were obtained, together with a considerable reduction in the particle size of the crosslinked PMMA. A subsequent third filtration effected with a filter of smaller aperture rendered the mixture more homogeneous and reduced the particle size of the crosslinked PMMA down to acceptable levels of about 150 micron.

Further filtration passages with filters of equal to decreasing aperture ensure further progressive dispersion, substantially giving the extruded product characteristics close to those of the virgin product.

The minimum number of multiple filtration passages to obtain an acceptable result is hence three successive passages. However the device 1 provides for up to six filtration passages, with filter apertures as previously indicated.

For proper success of the recycling process, a space must be provided between one filtration stage and the next. In this respect, with passage through three filters as described, but in contact with or only slightly spaced from each other, no improvement was achieved in the mixture with regard to dispersion.

Consequently where reference is made in the text to a filtration station, this term means a station housing at least one filter and enabling the mixture to optimize downstream of the filtration, the minimum distance between two consecutive filters being more than twice the useful diameter of the filter mesh.

Downstream of the sixth filter the mixture can be granulated, or be directly fed to a known line for producing multilayer (coextruded) slabs.

The product of this line consists of a multilayer coextruded slab 100, the first layer A and second layer B being formed of coloured virgin material (for example A is virgin PMMA, B is virgin ABS), the support layer C being composed exclusively of the described recycled product, i.e. of PMMA (and/or ABS) contaminated and crosslinked PMMA up to a maximum of 50% by weight. Specifically, the layer C presents particles P of crosslinked PMMA, finely dispersed in a matrix M of extruded PMMA, such particles presenting a diameter less than 200 micron.

The layer A has a thickness between 2% and 30% of the thickness of the slab 100, the layer B between 10% and 40%, and the layer C between 88% and 30%.

Preferably the layers A, B and C present a thickness of respectively 15%, 20% and 65% of the total thickness of the coextruded slab 100.

In an alternative embodiment, the slab 100 can be formed in two layers, the first layer A being a covering layer supported by the second layer C, which is formed by the device 1.

## Claims

1. A device for recycling a mixture of polymethylmethacrylate (PMMA) and/or acrylonitrile-butadiene-styrene (ABS) and crosslinked polymethylmethacrylate, comprising means (2, 8a, 8b, 8c) for feeding said mixture under pressure to a first filtration station (15a), a second filtration station (15b) and a third filtration station (15c) positioned in series, said stations being arranged to reduce the size of the crosslinked PMMA particles present in the mixture to below 200 micron, each station comprising at least one filter, **characterised in that** two consecutive filters are spaced apart, these filters being supported in order to remain spaced apart when loaded by the pressure of said mixture.

2. A device as claimed in claim 1, **characterised in that** the two filters are spaced apart by at least twice their useful diameter

3. A device as claimed in claim 1, **characterised in that** each station (15a, 15b, 15c) comprises at least one filter (13a, 14a, 13b, 14b, 13c, 14c) presenting a minimum passage aperture less than or equal to the aperture of the upstream filters.

4. A device as claimed in claim 1, **characterised in that** the feed means comprise an extruder unit (2) for feeding the mixture under pressure to the filtration stations (15a, 15b, 15c).

5. A device as claimed in claim 4, **characterised in that** an outlet (6) of the extruder unit is connected to an inlet (17a) of the first filtration station (15a).

6. A device as claimed in claim 1, **characterised in that** each filtration station (15a, 15b, 15c) presents at least a first support (7a, 7b, 7c) and a second support (9a, 9b, 9c) for said filters (13a, b, c, 14a, b, c).

7. A device as claimed in claim 6, **characterised in that** the support is a filter changer (7a, 7b, 7c, 9a, 9b, 9c).

8. A device as claimed in claim 6, **characterised in that** each of said stations (15a, 15b, 15c) presents a pump (8a, 8b, 8c) for raising the pressure of said mixture.

9. A device as claimed in claim 8, **characterised in that** said pump (8a, 8b, 8c) is a gear pump.

10. A device as claimed in claim 8, **characterised in that** said pump (8a, 8b, 8c) is disposed between the first support (7a, 7b, 7c) and the possible second support (14a, 14b, 14c) of each of said filtration stations (15a, 15b, 15c).

11. A device as claimed in claim 10, **characterised in that** the first filter (13a) and the second filter (14a) of the first station (15a) present a minimum passage aperture of 75 and 50 micron respectively, the filters (13b, 14b) of the second station (15b) present a minimum passage aperture of 50 and 40 micron respectively, whereas the third station (15c) presents only one filter (14c), with a minimum passage aperture of 40 micron.

12. A device as claimed in claim 10, **characterised in that** the first filter (13a) and the second filter (14a) of the first station (15a) present a minimum passage aperture of 50 and 50 micron respectively, the filters (13b, 14b) of the second station (15b) present a minimum passage aperture of 40 and 40 micron respectively, whereas the third station (15c) presents two filters (13c, 14c), with a minimum passage aperture of 30 and 25 micron respectively.

13. A device as claimed in claim 1, **characterised in that** said filters (13a, b, c, 14a, b, c) are of metal mesh type.

14. A device as claimed in claim 1, **characterised in that** said filters (13a, b, c, 14a, b, c) are of powder type.

15. A device as claimed in claim 14 or 15, **characterised in that** said filters (13a, b, c, 14a, b, c) are sintered.

16. A method for recycling a mixture of polymethylmethacrylate (PMMA) and/or acrylonitrile-butadiene-styrene (ABS) and crosslinked polymethylmethacrylate, **characterised by** passing said mixture under pressure through at least three spaced-apart filters in series, in such a manner as to reduce the size of the crosslinked PMMA particles present in the mixture to below 200 micron.

17. A method as claimed in claim 16, **characterised by** increasing the pressure of said mixture between at least two filters.

18. A multilayer coextruded slab (100) comprising at least a first covering layer (A) formed of a noble plastic material, **characterised in that** a layer (C) obtained according to the method defined in claim 16, of said slab is formed of a material comprising particles (P) of crosslinked PMMA immersed in a matrix (M) of PMMA and/or ABS, said particles (P) presenting a dimension less than 200 micron.

19. A slab as claimed in claim 18, **characterised by** presenting three layers.

20. A slab as claimed in claim 19, **characterised in that** the first layer (A) presents a thickness between 2% and 30% of the thickness of the slab (100).

21. A slab as claimed in claim 20, **characterised in that** a second layer (B) presents a thickness between 10% and 40% of the thickness of the slab (100).

22. A slab as claimed in claim 21, **characterised in that** the third layer (C) presents a thickness between 30% and 88% of the thickness of the slab (100).

23. A slab as claimed in claim 19, **characterised in that** the first layer (A), the second layer (B) and the third layer (C) present a thickness respectively of 15%, of 20% and of 65% of the total thickness of the slab (100).

## Patentansprüche

1. Gerät für die Wiederverwertung einer Mischung von Polymethylmethacrylat (PMMA) und/oder Acrylnitril-Butadien-Styrol (ABS) und vernetztem Polymethylacrylat, umfassend Möglichkeiten (2, 8a, 8b, 8c) für das Zuführen der Mischung unter Druck zu einer ersten Filtrierstation (15a), einer zweiten Filtrierstation (15b) und einer dritten Filtrierstation (15c), die hintereinandergeschaltet positioniert sind, wobei die Stationen so angeordnet sind, dass die Größe der vernetzten PMMA-Partikel, die in der Mischung vorliegen, auf weniger als 200 Mikron reduziert wird, wobei jede Station mindestens ein Filter umfasst, **dadurch gekennzeichnet, dass** zwei aufeinanderfolgende Filter im Abstand von einander gehalten werden, wobei diese Filter gestützt sind, um im Abstand von einander zu bleiben, wenn sie durch den Druck der Mischung belastet werden.

2. Gerät nach Anspruch 1, **dadurch gekennzeichnet, dass** die beiden Filter um mindestens das Doppelte ihres Nutzdurchmessers im Abstand voneinander gehalten werden.

3. Gerät nach Anspruch 1, **dadurch gekennzeichnet, dass** jede Station (15a, 15b, 15c) mindestens ein Filter (13a, 14a, 13b, 14b, 13c , 14c) umfasst, der eine Mindestdurchgangsöffnung von weniger als oder gleich der Öffnung der stromaufwärts gelegenen Filter bietet.

4. Gerät nach Anspruch 1, **dadurch gekennzeichnet, dass** die Zuführmöglichkeiten eine Extrudereinheit (2) zum Zuführen der Mischung unter Druck zu den Filtrierstationen (15a, 15b, 15c) umfassen.

5. Gerät nach Anspruch 4, **dadurch gekennzeichnet, dass** ein Auslass (6) der Extrudereinheit an einen Einlass (17a) der ersten Filtrierstation (15a) angeschlossen ist.

6. Gerät nach Anspruch 1, **dadurch gekennzeichnet, dass** jede Filtrierstation (15a, 15b, 15c) mindestens eine erste Stütze (7a, 7b, 7c) und eine zweite Stütze (9a, 9b, 9c) für die Filter (13a, b, c, 14a, b, c) bietet.

7. Gerät nach Anspruch 6, **dadurch gekennzeichnet, dass** die Stütze ein Filterwechsler (7a, 7b, 7c,9a, 9b, 9c) ist.

8. Gerät nach Anspruch 6, **dadurch gekennzeichnet, dass** jede der Stationen (15a, 15b, 15c) eine Pumpe (8a, 8b, 8c) zum Erhöhen der Drucks der Mischung bietet.

9. Gerät nach Anspruch 8, **dadurch gekennzeichnet, dass** die Pumpe (8a, 8b, 8c) eine Zahnradpumpe ist.

10. Gerät nach Anspruch 8, **dadurch gekennzeichnet, dass** die Pumpe (8a, 8b, 8c) sich zwischen der ersten Stütze (7a, 7b, 7c) und der möglichen zweiten Stütze (14a, 14b, 14c) jeder der Filtrierstationen (15a, 15b, 15c) befindet.

11. Gerät nach Anspruch 10, **dadurch gekennzeichnet, dass** das erste Filter (13a) und das zweite Filter (14a) der ersten Station (15a) eine Mindestdurchgangsöffnung von jeweils 75 und 50 Mikron bieten, die Filter (13b, 14b) der zweiten Station (15b) eine Mindestdurchgangsöffnung von jeweils 50 und 40 Mikron bieten, während die dritte Station (15c) nur ein Filter (14c) mit einer Mindestdurchgangsöffnung von 40 Mikron bietet.

12. Gerät nach Anspruch 10, **dadurch gekennzeichnet, dass** das erste Filter (13a) und das zweite Filter (14a) der ersten Station (15a) eine Mindestdurchgangsöffnung von jeweils 50 und 50 Mikron bieten, die Filter (13b, 14b) der zweiten Station (15b) eine Mindestdurchgangsöffnung von jeweils 40 und 40 Mikron bieten, während die dritte Station (15c) zwei Filter (13c, 14c) mit einer Mindestdurchgangsöffnung von jeweils 30 und 25 Mikron bietet.

13. Gerät nach Anspruch 1, **dadurch gekennzeichnet, dass** die Filter (13a, b, c, 14a, b, c) vom Metallmaschentyp sind.

14. Gerät nach Anspruch 1, **dadurch gekennzeichnet, dass** die Filter (13a, b, c, 14a, b, c) vom Pulvertyp sind.

15. Gerät nach Anspruch 14 oder 15, **dadurch gekennzeichnet, dass** die Filter (13a, b, c, 14a, b, c) gesintert sind.

16. Verfahren für die Wiederverwertung einer Mischung von Polymethylmethacrylat (PMMA) und/oder AcrylnitrilButadien-Styrol (ABS) und vernetztem Polymethylacrylat, **gekennzeichnet durch** das Hindurchführen der Mischung unter Druck **durch** mindestens drei von einander im Abstand gehaltene, hintereinandergeschaltete Filter, derart, dass die Größe der vernetzten PMMA-Partikel, die in der Mischung vorliegen, auf weniger als 200 Mikron reduziert wird.

17. Verfahren nach Anspruch 16, **gekennzeichnet durch** das Erhöhen des Drucks der Mischung zwischen mindestens zwei Filtern.

18. Mehrschichtige coextrudierte Platte (100) umfassend mindestens eine erste Deckschicht (A), die aus einem edlen Kunststoffmaterial gebildet ist, **dadurch gekennzeichnet, dass** eine dem in Anspruch 16 definierten Verfahren gemäß erhaltene Schicht (C) der Platte aus einem Material gebildet ist, das Partikel (P) von vernetztem PMMA umfasst, die in eine Matrix (M) von PMMA und/oder ABS getaucht sind, wobei die Partikel (P) eine Dimension von weniger als 200 Mikron aufweisen.

19. Platte nach Anspruch 18, **dadurch gekennzeichnet, dass** sie drei Schichten bietet.

20. Platte nach Anspruch 19, **dadurch gekennzeichnet, dass** die erste Schicht (A) eine Dicke zwischen 2% und 30 % der Dicke der Platte (100) bietet.

21. Platte nach Anspruch 20, **dadurch gekennzeichnet, dass** eine zweite Schicht (B) eine Dicke zwischen 10% und 40 % der Dicke der Platte (100) bietet.

22. Platte nach Anspruch 21, **dadurch gekennzeichnet, dass** die dritte Schicht (B) eine Dicke zwischen 30% und 88 % der Dicke der Platte (100) bietet.

23. Platte nach Anspruch 19, **dadurch gekennzeichnet, dass** die erste Schicht (A), die zweite Schicht (B) und die dritte Schicht (C) jeweils eine Dicke zwischen 15%, 20 % und 65 % der gesamten Dicke der Platte (100) bieten.

## Revendications

1. Dispositif destiné à recycler un mélange de polyméthylméthacrylate (PMMA) et/ou d'acrylonitrile-butadiène-styrène (ABS) et de polyméthylméthacrylate réticulé, comprenant des moyens (2, 8a, 8b, 8c) pour fournir ledit mélange sous pression à un premier poste de filtration (15a), un deuxième poste de filtration (15b) et un troisième poste de filtration (15c) positionnés en série, lesdits postes étant conçus pour réduire la taille des particules de PMMA réticulées présentes dans le mélange à une taille inférieure à 200 microns, chaque poste comprenant au moins un filtre, **caractérisé en ce que** deux filtres consécutifs sont écartés, ces filtres étant supportés afin de rester écartés lorsque la pression dudit mélange leur est appliquée.

2. Dispositif selon la revendication 1, **caractérisé en ce que** les deux filtres sont écartés d'au moins deux fois leur diamètre utile.

3. Dispositif selon la revendication 1, **caractérisé en ce que** chaque poste (15a, 15b, 15c) comprend au moins un filtre (13a, 14a, 13b, 14b, 13c, 14c) présentant une ouverture de passage minimum inférieure ou égale à l'ouverture des filtres en amont.

4. Dispositif selon la revendication 1, **caractérisé en ce que** les moyens d'alimentation comprennent une unité d'extrusion (2) pour fournir le mélange sous pression aux postes de filtration (15a, 15b, 15c).

5. Dispositif selon la revendication 4, **caractérisé en ce qu'**une sortie (6) de l'unité d'extrusion est reliée à une entrée (17a) du premier poste de filtration (15a).

6. Dispositif selon la revendication 1, **caractérisé en ce que** chaque poste de filtration (15a, 15b, 15c) présente au moins un premier support (7a, 7b, 7c) et un second support (9a, 9b, 9c) pour lesdits filtres (13a, b, c, 14a, b, c).

7. Dispositif selon la revendication 6, **caractérisé en ce que** le support est un changeur de filtre (7a, 7b, 7c, 9a, 9b, 9c).

8. Dispositif selon la revendication 6, **caractérisé en ce que** chacun desdits postes (15a, 15b, 15c) présente une pompe (8a, 8b, 8c) pour augmenter la pression dudit mélange.

9. Dispositif selon la revendication 8, **caractérisé en ce que** ladite pompe (8a, 8b, 8c) est une pompe à engrenages.

10. Dispositif selon la revendication 8, **caractérisé en ce que** ladite pompe (8a, 8b, 8c) est disposée entre le premier support (7a, 7b, 7c) et le second support possible (14a, 14b, 14c) de chacun desdits postes de filtration (15a, 15b, 15c).

11. Dispositif selon la revendication 10, **caractérisé en ce que** le premier filtre (13a) et le second filtre (14a) du premier poste (15a) présentent une ouverture de passage minimum de 75 et 50 microns respectivement, les filtres (13b, 14b) du deuxième poste (15b) présentent une ouverture de passage minimum de 50 et 40 microns respectivement, tandis que le troisième poste (15c) présente un seul filtre (14c), avec une ouverture de passage minimum de 40 microns.

12. Dispositif selon la revendication 10, **caractérisé en ce que** le premier filtre (13a) et le second filtre (14a) du premier poste (15a) présentent une ouverture de passage minimum de 50 et 50 microns respectivement, les filtres (13b, 14b) du deuxième poste (15b) présentent une ouverture de passage minimum de 40 et 40 microns respectivement, tandis que le troisième poste (15c) présente deux filtres (13c, 14c), avec une ouverture de passage minimum de 30 et 25 microns respectivement.

13. Dispositif selon la revendication 1, **caractérisé en ce que** lesdits filtres (13a, b, c, 14a, b, c) sont du type maille métallique.

14. Dispositif selon la revendication 1, **caractérisé en ce que** lesdits filtres (13a, b, c, 14a, b, c) sont de type poudre.

15. Dispositif selon la revendication 14 ou 15, **caractérisé en ce que** lesdits filtres (13a, b, c, 14a, b, c) sont frittés.

16. Procédé de recyclage d'un mélange de polyméthylméthacrylate (PMMA) et/ou d'acrylonitrile-butadiène-styrène (ABS) et de polyméthylméthacrylate réticulé, **caractérisé par** le passage dudit mélange sous pression à travers au moins trois filtres écartés disposés en série, de telle manière à réduire la taille des particules PMMA réticulées présentes dans le mélange à une taille inférieure à 200 microns.

17. Procédé selon la revendication 16, **caractérisé par** l'augmentation de la pression dudit mélange entre au moins deux filtres.

18. Plaque coextrudée multicouches (100), comprenant au moins une première couche de couverture (A) formée d'un matériau plastique noble, **caractérisée en ce qu'**une couche (C), obtenue selon le procédé de la revendication 16, de ladite plaque est formée d'un matériau comprenant des particules (P) de PMMA réticulé immergé dans une matrice (M) de PMMA et/ou d'ABS, lesdites particules (P) présentant une dimension inférieure à 200 microns.

19. Plaque selon la revendication 18, **caractérisée en ce qu'**elle présente trois couches.

20. Plaque selon la revendication 19, **caractérisée en ce que** la première couche (A) présente une épaisseur entre 2 % et 30 % de l'épaisseur de la plaque (100).

21. Plaque selon la revendication 20, **caractérisée en ce qu'**une deuxième couche (B) présente une épaisseur entre 10 % et 40 % de l'épaisseur de la plaque (100).

22. Plaque selon la revendication 21, **caractérisée en ce que** la troisième couche (C) présente une épaisseur entre 30 % et 88 % de l'épaisseur de la plaque (100).

23. Plaque selon la revendication 19, **caractérisée en ce que** la première couche (A), la deuxième couche (B) et la troisième couche (C) présentent une épaisseur de 15 %, de 20 % et de 65 % de l'épaisseur totale de la plaque (100).
